# EUROPÄISCHE PATENTSCHRIFT

(11) **EP 0 385 189 B1**
(45) Veröffentlichungstag und Bekanntmachung des Hinweises auf die Patenterteilung: **17.08.1994**
(21) Anmeldenummer: 90102923.1
(22) Anmeldetag: 15.02.1990
(51) Int. Cl.: F02D 23/02, F02B 37/04, F02D 33/02, F02B 37/00, F02B 33/44

(54) **Beschleunigungshilfe für eine abgasturboaufgeladene Brennkraftmaschine**
Acceleration aid for an exhaust gas turbocharged engine
Dispositif d'aide à l'accélération pour moteurs à combustion interne suralimentés par turbocompresseur

(30) Priorität: 28.02.1989 DE 3906312
(43) Veröffentlichungstag der Anmeldung: 05.09.1990
(73) Patentinhaber: MAN NUTZFAHRZEUGE AG, 80995 München (DE)
(72) Erfinder: Lorenz, Jürgen, D-8500 Nürnberg (DE); Ensner, Jürgen, D-8500 Nürnberg (DE); D'Alfonso, Nunzio, Dr.-Ing., D-8500 Nürnberg (DE)

(56) Entgegenhaltungen:
- WO-A-89/05393
- DE-A- 2 414 293
- DE-A- 3 737 743
- DE-B- 1 240 332
- DE-C- 3 906 312
- FR-A- 1 024 771
- FR-A- 2 396 869
- FR-A- 2 474 583
- US-A- 3 673 796

## Beschreibung

Die Erfindung bezieht sich auf eine abgasturboaufgeladene Brennkraftmaschine mit verbessertem Beschleunigungsverhalten gemäß dem Oberbegriff des Anspruchs 1.

Vorrangige Ziele bei der Entwicklung verbesserter Antriebsaggregate für den Nutzfahrzeugbetrieb sind gutes Anfahrverhalten, geringer Verbrauch sowie eine möglichst geringe Schadstoffbelastung der Umwelt durch Motorabgase. Zur Verwirklichung dieser Ziele werden heute zunehmend aufgeladene Motoren mit hoher Leistungsdichte eingesetzt. Sie beziehen die Anhebung des mittleren effektiven Drucks im allgemeinen aus Abgasturboladern. Dabei bewirkt die zusätzliche Kühlung der Ladeluft eine weitere Steigerung des effektiven Mitteldrucks.

Abgasturboaufgeladene Dieselmotoren mit Ladeluftkühlung haben dank ihrer hohen spezifischen Leistung mehrere Vorteile gegenüber Saugmotoren:
- der relative Anteil der Reibungsverluste an der indizierten Leistung wird geringer. Damit sinkt der Kraftstoffverbrauch
- das kleinere Bauvolumen erlaubt eine flexiblere Gestaltung des Fahrgastraumes
- niedrigerer Preis durch geringeren Materialaufwand.

Den genannten Vorteilen steht das bekannte Problem der verlangsamten Ansprechzeit von abgasturboaufgeladenen Motoren ("turbolag") gegenüber. Der Luftmangel während der Beschleunigungsvorgänge führt außerdem zu einem ausgeprägten Rauchstoß.

Zur Verbesserung des Beschleunigungsverhaltens sind verschiedene Vorschläge bekannt. Sie beruhen im wesentlichen auf der Idee, dem Motor die im erhöhten Lastzustand fehlende Luftmenge von außen zuzuführen (Lufteinblasung) oder diese durch ein schnelleres Hochdrehen der Abgasturbolader früher bereitzustellen.

So ist z. B. bekannt, die Einblasung der Hilfsladeluft ins Saugrohr unter Verwendung eines Zusatzverdichters mit Hilfsantrieb zu verwirklichen. Auch kann dabei gegebenenfalls ein Druckluftspeicher Anwendung finden, jedoch nur zum Antrieb des Hilfsantriebes. Eine entsprechende Rückschlagklappe ist hierbei in der Saugleitung des Hauptverdichters angeordnet (vergleiche DE-PS 31 00 732).

Nachteilig hierbei ist, daß während der Lufteinblasung das gesamte Leitungsvolumen (bis zur dann geschlossenen Rückschlagklappe) erst gefüllt werden muß, und dadurch der Turbolader sogar kurzzeitig abgebremst wird (Drehzahlabsenkung des Abgasturboladers). Besonders ungünstig ist eine derartige Anordnung der Rückschlagklappe bei Verwendung eines Ladeluftkühlers, welchen man zwischen Verdichter und Saugrohr vorsieht. Da die Zusatzluft durch einen zusätzlichen Turbolader erzeugt wird, erfolgt der Druckaufbau im System relativ langsam, was durchaus der Erwartung einer Beschleunigungsverbesserung für den dort vorliegenden Anwendungsfall, nämlich Anwendung für Großmotoren hauptsächlich bei Stationärbetrieb, entspricht. Die Lufteinblasung erfolgt hier relativ selten, wobei eine große Menge Druckluft langsam erzeugt und für längere Zeit bereit gehalten wird.

Eine wirkungsvollere Lufteinblasung, von der gattungsmäßig auch ausgegangen wird, ist aus der US-PS 36 73 796 bekannt, da hier die Rückschlagklappe in unmittelbarer Nähe des Saugrohres nach dem Verdichter vorliegt. Der Gegenstand dieser Druckschrift (es soll hierbei die Drehzahl des Antriebsmotors eines Stromgenerators konstant gehalten werden) bezieht sich ebenfalls auf eine Verbesserung des Lastannahme- bzw. Ansprechverhaltens von abgasturboaufgeladenen Motoren durch Bereitstellung einer ausreichenden Druckluftmenge.

Bei instationärem Fahrzeugbetrieb, insbesondere Nutzfahrzeugbetrieb,bei dem sehr häufig Lufteinblasungen notwendig sind, gilt es aber, nicht nur die Beschleunigungszeit zu verbessern, sondern auch den bei der Beschleunigung auftretenden Rauchstoß zu beseitigen (insbesondere soll eine Partikelverminderung erreicht werden). Die bekannten Vorveröffentlichungen bieten hierzu keine Lösungen an.

Gemäß dem Wunsch des Fahrers wird beim üblichen Beschleunigungsvorgang aus niedriger Last und Drehzahl durch das Durchtreten des Fahrpedals die Kraftstoffmenge im Brennraum des Motors sofort erhöht, wodurch die Beschleunigung beginnt. In diesem Moment herrschen im Brennraum unzureichende Gemischbildungszustände, d. h. der im Einlaßkanal erzeugte Drall, die im Brennraum erzeugte Turbulenz sowie die Zerstäubung und Verteilung des Kraftstoffes sind für eine saubere Verbrennung der erhöhten Kraftstoffmenge zu ungünstig.

Diese bekannte Tatsache gilt sowohl für Saugmotoren, als auch für aufgeladene Motoren. Da bei aufgeladenen Motoren, insbesondere bei turboaufgeladenen, dieses Problem wegen der Trägheit der Ladegruppe größer als bei Saugmotoren ist, verfügen die Motoren mit Abgasturboladern über eine ladedruckabhängige Kraftstoffmengenbegrenzung (LDA). Diese LDA-Regelung sorgt dafür, daß beim Beschleunigungsvorgang die Kraftstoffmenge dem Ladedruck entsprechend, aber mit einem notwendigen Beschleunigungsüberschuß, freigegeben wird.

Die Kraftstoffmenge kann vom LDA nicht so begrenzt werden, daß die Abgasqualität so günstige Werte wie im stationären Betrieb annimmt, da sonst die Beschleunigung des Fahrzeuges nicht akzeptabel ist.

Auch die Anwendung der gattungsgemäßen Lufteinblasung gemäß der US-PS 36 73 796 trägt - wie bereits angedeutet - zur Abgasverbesserung nichts bei, da es hier - mit dem Ziel des Konstanthaltens einer bestimmten Drehzahl - zwingend erforderlich ist, praktisch gleichzeitig zur Lufteinblasung in das Saugrohr die erhöhte Kraftstoffeinspritzmenge in den Brennraum freizugeben. Dieses Vorgehen hat zur Folge, daß in der Zeit zwischen der plötzlich vermehrten Kraftstoffeinspritzung und dem Eintreffen der Druckluft im Brennraum die vorstehend beschriebene Phase mangelnder Verbrennungsluftversorgung herrscht. Unter diesen Umständen muß ein ausgeprägter Rauchstoß in Kauf genommen werden.

Aufgabe der Erfindung ist es deshalb, bei abgasturboaufgeladenen Verbrennungsmotoren, insbesondere bei denen, die in Nutzfahrzeugen mit hauptsächlich instationärem Betrieb zum Einsatz kommen, unter Anwendung der gattungsgemäßen Hilfsladeluftzuführung den üblichen Beschleunigungsablauf derart zu verändern, daß der Abgasrauchstoß (insbesondere die Partikelerhöhung) gänzlich verhindert wird.

Erfindungsgemäß wird diese Aufgabe durch die gekennzeichneten Merkmale des Patentanspruches 1 gelöst.

Ausgang für eine Beschleunigung ist bei der Erfindung also nach wie vor der Fahrerwunsch. Das Durchtreten des Fahrpedals bewirkt jedoch nicht mehr sofort die Kraftstofferhöhung, sondern es bewirkt zuerst die Einblasung von Zusatzluft in den Motor. Erst danach wird die Kraftstoffmenge erhöht und der vorhandenen Luftmenge angepaßt. Dadurch ist gewährleistet, stets ausreichend hohe Luftverhältnisse im Brennraum zu haben, wenn die erhöhte Kraftstoffmenge dort eingespritzt wird.

Damit die an der Abgasturbine des Turboladers vorhandene Energie so schnell wie möglich erhöht und dadurch das Laufzeug des Turboladers beschleunigt wird, werden die eingeblasene Luftmenge und der davon abhängige Druckaufbau im Saugrohr so angepaßt, daß die sonst durch mangelnden Ladedruck bewirkte Zurückhaltung der maximal eingestellten Kraftstoffmenge durch den üblicherweise in den Einspritzpumpen der turboaufgeladenen Dieselmotoren vorhandenen LDA beim Beschleunigen sofort durch Überdrücken des LDA-Mechanismus aufgehoben wird. Die Verbrennung der somit eingespritzten maximalen Vollastmenge erfolgt dann ohne sichtbare Rauchentwicklung. Dies setzt den Anschluß des LDA am Saugrohr voraus.

Unter Inkaufnahme einer weniger starken Beschleunigung des Turboladers, die in manchen Anwendungsfällen wünschenswert sein kann, kann der LDA-Anschluß auch zwischen Rückschlagklappe und Verdichter des Turboladers liegen. Dadurch entfällt das Überdrücken des LDA durch die Zusatzluft.

Dies alles wird erfindungsgemäß durch entsprechende Steuerung der Abläufe im Kraftstoff- und Ladeluftsystem erreicht. Dabei sollte die Lufteinblasung bis maximal zwei Sekunden vor Erreichen der Vollastmenge begonnen werden und maximal zwei Sekunden lang erfolgen. Als besonders vorteilhaft hat sich - ausgehend von einem Sechs-Zylinder-Dieselmotor mit einem Hubvolumen von ca. sieben Litern mit einem maximalen effektiven Mitteldruck von ca. 16 bar - ein Einblasbeginn von 0,4 bis 0,5 Sekunden vor Erreichen der Vollastmenge sowie eine Einblasdauer von 0,5 bis 0,8 Sekunden erwiesen (bei einem Druck von 5 bar im Druckluftspeicher). Die vermehrte Kraftstoffzuführung bis zum Erreichen der Vollastmenge kann sprunghaft erfolgen, d. h. der Mengenverstellmechanismus der Einspritzpumpe wird nach Ablauf der obig angesprochenen Zeitspanne ruckartig betätigt. Die Kraftstoffvermehrung kann aber auch bis zum Erreichen der maximalen Kraftstoffmenge (Vollastmenge) einen Gradientenverlauf haben, d. h. der Mengenverstellhebel der Einspritzpumpe wird verlangsamt bewegt.

Vorteilhafte und förderliche Weiterbildungen der Erfindung sind den Merkmalen der Unteransprüche zu entnehmen.

Einzelheiten der Erfindung können der nachfolgenden Beschreibung der Zeichnung entnommen werden. Es zeigen:
- Figur 1: eine schematische Darstellung des Motors im Zusammenwirken mit den Turboladerkomponenten und der Zusatzlufteinschließlich Kraftstoff-Versorgung und die
- Figuren 2 und 3: jeweils Diagramme, aus denen die erfindungsgemäße Erreichung der maximalen Kraftstoffmenge (Vollastmenge) nach Beginn der Lufteinblasung hervorgehen.

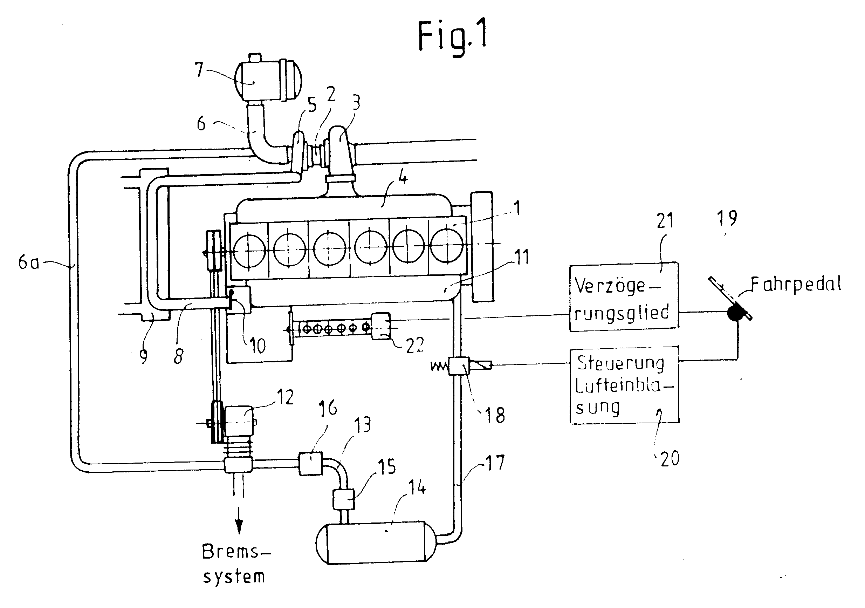

In der Figur 1 ist mit 1 eine Brennkraftmaschine und mit 2 ein Abgasturbolader dargestellt. Die Turbine 3 des Turboladers 2 ist über eine Abgassammelleitung 4 mit der Brennkraftmaschine 1 verbunden. Ein Verdichter 5 saugt Luft über eine Saugleitung 6, in der ein Filter 7 vorgesehen ist, an und fördert dann die verdichtete Luft über eine Leitung 8, in der ein Ladeluftkühler 9 vorliegt, in das Saugrohr 11 (Ladeluftsammelleitung) der Brennkraftmaschine 1. Bei diesem Vorgang ist ein in der (Lade-)Luftleitung vorliegendes selbsttätiges Ventil 10 (Rückschlagventil bzw. Rückschlagklappe) geöffnet.

An die Saugleitung 6 ist über eine Zusatzleitung 6a ein weiterer Verdichter 12 angeschlossen. Dieser wird von der Brennkraftmaschine angetrieben und dient der Erzeugung der Bremsluft. Sobald im (nicht gezeigten) Druckluftbehälter der Bremsanlage ein bestimmtes Druckniveau erreicht ist, öffnet in einer Leitung 13 ein Ventil 16, so daß die vom Verdichter 12 verdichtete Luft über die erwähnte Leitung 13 zu einem Druckluftbehälter 14 weitergeleitet wird. Dieser wird bis zu einem bestimmten Druck (die Einstellung erfolgt über einen zusätzlichen in der Leitung 13 vorliegenden Druckregler 15) gefüllt. Die obere Grenze des Luftdrucks richtet sich nach dem maximalen Druck des Bremssystems.

Es ist auch möglich, daß der zusätzliche Verdichter 12 ausschließlich den Druckluftbehälter 14 speist. In diesem Fall kann der Druck im Druckluftbehälter den Druck des Bremssystems überschreiten und außerdem entfällt die Leitung zum Bremssystem sowie das Ventil 16 in der Leitung 13.

Die im Druckbehälter 14 gespeicherte Druckluft wird dazu benutzt, um den beim Beschleunigen bzw. Anfahren des Fahrzeuges in der Brennkraftmaschine auftretenden Ladeluftmangel (bedingt durch die in diesen Fällen fehlende Abgasenergie) auszugleichen. Hierzu ist eine Zusatzluftleitung 17 vorgesehen, in der ein Magnetventil 18 vorliegt. Letzteres bewirkt im geöffneten Zustand die Lufteinblasung, welche direkt ins Saugrohr 11 erfolgt. Durch die gattungsgemäße Anordnung (am Ende der Ladeluftleitung 8 unmittelbar vor Eintritt derselben in das Saugrohr 11 der Brennkraftmaschine 1) des selbsttätigen Ventils 10, welches bei der Lufteinblasung geschlossen ist, wird eine optimale Ausnutzung der zugeführten Zusatz-Druckluft erreicht. Es geht nahezu keine Luft verloren, und es erfolgt ein sofortiger Druckaufbau. Hierdurch wird die Beschleunigungszeit stark reduziert.

Das Signal zur Einleitung einer Einblasung von Druckluft wird der Stellung des Fahrpedals 19 entnommen. Sobald der Fahrer das Fahrpedal durchtritt, wird ein Verzögerungsglied 21 in der Kraftstoffeinspritzanlage (das Verzögerungsglied 21 wirkt dabei auf den Mengenverstellmechanismus der Einspritzpumpe 22, um diesen verspätet zu betätigen oder mit einer definierten Geschwindigkeit zu bewegen) angesprochen. Erreicht das Fahrpedal die Vollastposition oder eine Stellung nahe der Vollastposition (ca. 80 bis 95 % des gesamten Pedalweges, wobei angenommen wird, daß Pedalweg und Einspritzmenge proportional verlaufen), wird die Steuerung 20 der Lufteinblasung angesprochen. Diese erfolgt sprunghaft durch schnelles Öffnen des Magnetventils 18. Das Öffnen des Magnetventils 18 kann - wie später noch beschrieben - auch von bestimmten Motordrehzahlen bzw. Fahrzeuggeschwindigkeiten abhängig sein.

Die Steuerung 20, welche elektrischer oder pneumatischer Art sein kann, hat die Aufgabe, das Magnetventil 18 für eine bestimmte Zeit zu öffnen. Wie bereits erwähnt, strömt während dieser Zeit Druckluft aus dem Behälter 14 in das Saugrohr 11. Sobald der Druck im Saugrohr 11 über den Ladedruck in der Leitung 8 (nach dem Ladeluftkühler 9) steigt, schließt das selbsttätige Ventil (Rückschlagklappe 10). Auf diese Weise ist - wie ebenfalls schon erwähnt - nur das Saugrohrvolumen aufzufüllen, so daß eine schnelle Ladeluftversorgung der Brennkraftmaschine gewährleistet ist.

Erfindungsgemäß erfolgt während des eben beschriebenen Füllvorgangs des Motorsaugsystems keine vermehrte Kraftstoffeinspritzung bzw. die Vermehrung der Kraftstoffeinspritzung erfolgt mit einem solchen Gradienten, daß im Zylinder dank des im Saugrohr durch die Lufteinblasung erhöhten Luftdrucks eine genügende Frischluftladung vorhanden ist, um die angebotene Kraftstoffmenge rußfrei zu verbrennen. Der notwendige Eingriff in den zeitlichen Ablauf der Kraftstoffzumessung läßt sich am leichtesten durchführen, wenn die Signalübertragung auf elektrischem oder elektronischem Wege erfolgt. Dabei ist das Verzögerungsglied 21 innerhalb einer elektronischen Steuerung für die Einspritzpumpe 22 integriert. Es kann aber auch in der Steuerung eines elektrischen Stellmotors (elektronischen Gaspedals) vorliegen und so die Verzögerung bzw. Verlangsamung der Kraftstoffmengenerhöhung bewirken. Auch ist eine verzögerte Kraftstoffzumessung auf der Basis einer mechanischen Steuerung vorstellbar (z. B. pneumatisch oder hydraulisch).

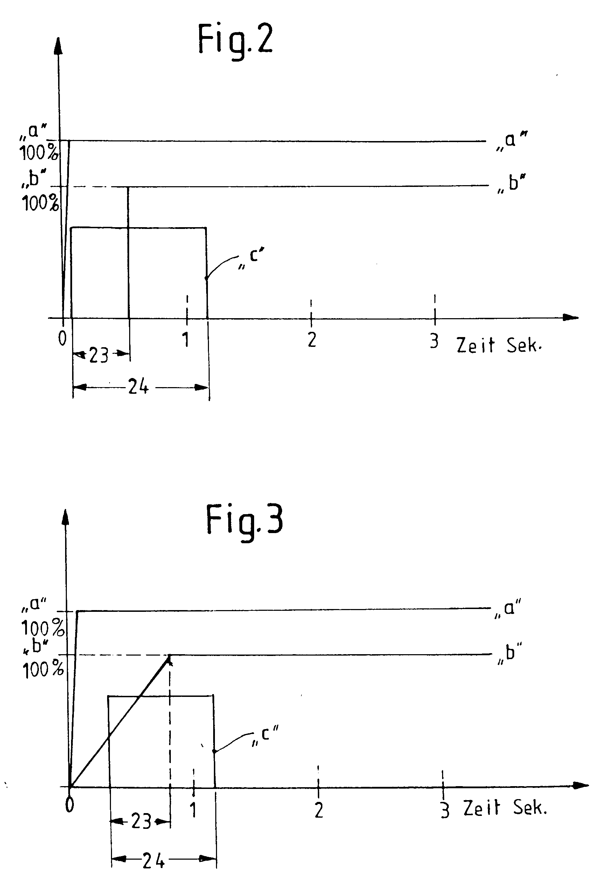

In den Figuren 2 und 3 sind der zeitliche Verlauf der Fahrpedalbewegung "a", der Kraftstoff vermehrung "b" und der Magnetventilbewegung "c" des Lufteinblasungsventils während eines Beschleunigungsvorgangs dargestellt. Hierbei ist jeweils auf der Abszisse die Zeit in Sekunden und auf der Ordinate der Pedalweg sowie die Kraftstoffmenge (jeweils in Prozenten ausgedrückt) aufgetragen. Ebenso ist auf der Ordinate noch die Öffnungsbewegung des Lufteinblasventils dargestellt.

Bei der Figur 2 wird die volle Kraftstoffmenge verspätet nach einer vorgesehenen Zeit eingebracht, die für die Füllung der Motorzylinder mit der ins Saugrohr eingeblasenen Druckluft notwendig ist. Dagegen hat die Kraftstoffvermehrung in der Figur 3 einen Gradientenverlauf, der nur beispielhaft linear dargestellt ist.

In beiden Figuren ist der zeitliche Unterschied zwischen Einblasbeginn und Erreichen der Vollastmenge (Beginn der vollen Kraftstoffeinspritzung) durch die Bezugsziffer 23 zum Ausdruck gebracht. Die Einblasdauer ergibt sich jeweils aus der Strecke 24.

Nach Beginn der Lufteinblasung setzt sich deren Wirkung im direkten Anschluß auch im Abgassystem fort. Durch das durch die Verbrennung der einsetzenden Vermehrung des Kraftstoffes gestiegene Enthalpie-Gefälle an der Turbine 3 wird diese und mit ihr das Verdichterlaufrad 5 beschleunigt. Dieser Effekt wird im Fall der sprunghaft erhöhten Kraftstoffmenge durch deren Verbrennung noch verstärkt, weil sowohl die Abgasmenge als auch deren Enthalpie durch den erfindungsgemäßen Ablauf der Lufteinblasung nun stärker ansteigen. Die rasche Drehzahlerhöhung des mit der Abgasturbine gekoppelten Verdichters 5 hat die schnelle Zunahme des Ladedrucks in der Ladeluftleitung 8 zur Folge. Nach dem Ende der Einblasung überschreitet der Druck in besagter Leitung 8 denjenigen im Saugrohr 11, so daß die Rückschlagklappe 10 wieder öffnet. Die Beschleunigung des Motors ist jetzt bereits so weit forgeschritten, daß sich der Ladedruck auf einem hohen Niveau befindet und keine instationär bedingte Raucherhöhung mehr auftritt. Zu diesem Zeitpunkt hat die Steuerung 20 bereits das Schließen des Magnetventils 18 veranlaßt, um die Menge der eingeblasenen Zusatzluft (je nach Motortyp bzw. Belastungsfall wird ein Normvolumen Luft, welches zwischen dem 5- und 50fachen des Hubvolumens des jeweiligen Motors beträgt, eingeblasen) auf das notwendige Maß zu beschränken. Vorzugsweise werden das 10- bis 20fache des Hubvolumens eingeblasen, wobei der Druck im Druckluftspeicher 14 zwischen 2 und 16 bar liegen kann. Die optimale Zeitspanne für die Lufteinblasung wird dem jeweiligen Anwendungsfall angepaßt.

Damit nicht unnötigerweise Druckluft verbraucht wird, wenn der Motor oder das Fahrzeug sich bei höherer Drehzahl oder Geschwindigkeit befinden, d. h. in Fällen, bei denen sich der Turbolader schon bei höherer Drehzahl befindet, kommen Vorrichtungen zur Anwendung, die die Lufteinblasung über einer der Betriebsart des Fahrzeugs angemessenen Motordrehzahl bzw. Fahrzeuggeschwindigkeit sperren. Dies kann in einfacher Weise über Relais erfolgen, die von der Lichtmaschine oder von Drehzahlgebern angesteuert werden.

Ein Stillstandswächter, der ebenfalls von der Lichtmaschine angesteuert wird, sorgt dafür, daß keine Druckluft bei stillstehendem Motor ins Saugrohr eingeblasen wird.

Einer weiteren Vergeudung von Druckluft aus dem Behälter 14 wird dadurch vorgebeugt, daß eine erneute Lufteinblasung erst dann erfolgen kann, wenn das Fahrpedal 19 die Vollaststellung verlassen hat und ein wiederholtes Durchtreten erfolgt.

Bei Vorliegen einer elektronischen Regelung der Einspritzpumpe läßt sich die Steuerung der Lufteinblasung besonders günstig verwirklichen. Die Lufteinblasung läßt sich hier auf solche Fälle beschränken, in denen neben dem Erreichen der Vollastposition bzw. nahe der Vollastposition des Fahrpedals (ca. 80 bis 95 %) zusätzlich gewährleistet ist, daß die Betätigung des Fahrpedals mit einer Geschwindigkeit erfolgt, die eine gegebene Schwelle überschreitet (die Zeit zwischen Leerlauf- und Vollaststellung beträgt zwischen 0,1 und 2 Sekunden). Darüber hinaus läßt sich durch Vorgabe einer Grenzdrehzahlkurve (abhängig vom Moment bzw. der Last) die Lufteinblasung auf Betriebsbereiche unterhalb einer bestimmten Drehzahl festlegen. Außerdem ergäbe sich der Vorteil, die Funktion der Einspritzmengenerhöhung beliebig zu gestalten (vergleiche beispielsweise Figur 2, hier liegt eine Sprungfunktion vor).

Besonders vorteilhaft läßt sich die Erfindung bei Omnibusfahrzeugen (Stadtbussen mit Haltestellenbetrieb) anwenden, deren Antriebsstrang über einen hydraulischen Wandler mit Automatikgetriebe verfügt. In diesem Fall ist die individuelle Beeinflußbarkeit des zeitlichen Lastverhaltens besonders gering (z. B. kein Schleifen der Kupplung), so daß die Paramter der Lufteinblasung, die ihr zeitliches Verhalten festlegen, optimal eingestellt werden können.

Die Vorteile der Lufteinblasung bleiben weitgehend auch im Zusammenspiel mit Schaltgetrieben erhalten. In diesem Fall ist die Auslöung der Lufteinblasung auch von der Betätigung der Kupplung sowie vom eingelegten Gang abhängig.

Abschließend ist zu erwähnen, daß der Verlauf der in den Figuren 2 und 3 beschriebenen Kraftstoffvermehrung auch nach anderen Gesetzmäßigkeiten erfolgen kann, die von der Art des Verzögerungsgliedes 21 und von der Art, mit der die Druckluft in die Zylinder des Motors gelangt, abhängen. Ebenfalls muß die Lufteinblasung nicht auf einmal (wie gezeigt) erfolgen, sondern könnte auch in mehreren Stufen oder durch Takten des Magnetventils 18 erfolgen.

Die Erfindung ist auch im Zusammenhang mit Saugmotoren, die einen Rauchstoß beim Beschleunigen vorn unteren Leerlauf aus emittieren, einsetzbar.

## Patentansprüche

1. Luftverdichtende, selbstzündende Brennkraftmaschine von Bauart und Größe, die sich hauptsächlich für die Anwendung in Nutzfahrzeugen, LKWs und Omnibussen eignet, mit durch eine Abgasturbine (3) angetriebenem Ladeluftverdichter (5), insbesondere mit einem nach dem Ladeluftverdichter angeordnetem Ladeluftkühler (9), und einem in der Ladeluftleitung unmittelbar vor Eintritt in das Saugrohr (11) der Brennkraftmaschine angeordnetem, selbsttätigem Ventil (10), welches bei einem Luftstrom in Richtung Saugrohr geöffnet ist und wobei während Zeitspannen mangelnder Abgasenergie zur erhöhten Versorgung des Saugrohres der Brennkraftmaschine Hilfsladeluft direkt aus einem Druckluftspeicher entnommen und dem Saugrohr durch entsprechende Steuermittel zugeführt wird und der Kraftstoff zeitlich verzögert gegenüber der Hilfsladeluft eingespritzt wird, dadurch gekennzeichnet, daß - ausgelöst durch das Betätigen des Fahrpedals (19) - die Steuerung (20) der Lufteinblasung sowie ein Verzögerungsglied (21) in der Kraftstoffeinspritzanlage angesprochen wird, wodurch die Zuführung der Hilfsladeluft der geforderten Kraftstoffeinspritzung zeitlich voreilt, und die Einspritzung der vollen Kraftstoffeinspritzmenge erst später mit einer zeitlichen Verschiebung von 0,4 bis 2 Sekunden gegenüber dem Einblasebeginn der Hilfsladeluft bei einer Einblasedauer von 0,5 bis 2 Sekunden - entweder sprungartig oder nach einem langsam ansteigenden Vermehrungsverlauf einsetzt, wobei während eines Beschleunigungsvorgangs je nach Motortyp bzw. Belastungsfall ein Normvolumen Luft eingeblasen wird, welches zwischen dem 5- und 50fachen des Hubvolumens des jeweiligen Motors beträgt.

2. Brennkraftmaschine nach Anspruch 1, dadurch gekennzeichnet, daß das Verzögerungsglied (21) innerhalb einer elektronischen Steuerung der Einspritzpumpe (22) integriert ist.

3. Brennkraftmaschine nach Anspruch 1, dadurch gekennzeichnet, daß die Verzögerung bzw. Verlangsamung der Kraftstoffmengenerhöhung durch ein in der Steuerung eines elektrischen Stellmotors vorliegendes Verzögerungsglied (21) erreicht wird.

4. Brennkraftmaschine nach Anspruch 1, dadurch gekennzeichnet, daß die zum Einsatz kommende Hilfsladeluft durch ein Magnetventil (18), welches in einer vom Druckluftbehälter (14) zum Saugrohr (11) führenden Leitung (17) vorliegt, zugeteilt wird.

5. Brennkraftmaschine nach Anspruch 1, dadurch gekennzeichnet, daß der Druckluftbehälter (14) durch einen für das Bremssystem des Fahrzeuges vorliegenden Kompressor (12), welcher von der Brennkraftmaschine angetrieben wird, über eine Zuführleitung (13) gefüllt wird, in der ein Druckregler (15) vorgesehen ist.

6. Brennkraftmaschine nach Anspruch 1, dadurch gekennzeichnet, daß die Lufteinblasung nur erfolgt, wenn bestimmte Motordrehzahl- bzw. Fahrzeuggeschwindigkeitsgrenzen eingehalten werden.

7. Brennkraftmaschine bzw. Hilfsladeluftzuführung nach Anspruch 1, dadurch gekennzeichnet, daß diese bevorzugt bei Omnibus-Fahrzeugen, deren Antriebsstrang über einen hydraulischen Wandler mit Automatikgetriebe verfügt, zur Anwendung kommt.

8. Brennkraftmaschinen nach Anspruch 1, dadurch gekennzeichnet, daß bei einem Hubvolumen von 7 l der Einblasebeginn 0,4 bis 0,5 Sekunden vor Erreichen der Vollastmenge erfolgt und die Einblasedauer 0,5 bis 0,8 Sekunden beträgt.

## Claims

1. An air-compression, compression ignition internal combustion engine of a construction and size mainly suitable for use in commercial vehicles, heavy goods vehicles and buses, with an air charge compressor (5) driven by an exhaust gas turbine (3), in particular with an air charge cooler (9) positioned downstream of the air charge compressor, and, positioned in the air charge pipe immediately upstream of the inlet into the manifold passage (11) of the internal combustion engine, an automatic valve (10) which is opened in the direction of the manifold passage when there is an air flow and, during periods of inadequate exhaust gas energy, in order to increase the supply to the manifold passage of the internal combustion engine an auxiliary air charge is taken direct from a compressed air reservoir and supplied to the manifold passage by appropriate control means and the fuel is injected after a time lag as compared with the auxiliary air charge, characterised in that, as a result of the operation of the accelerator pedal (19), the control mechanism (20) for the air injection and a time-lag device (21) in the fuel injection system are actuated, which causes the auxiliary air charge supply to precede the required fuel injection in terms of time and the injection of the full fuel injection quantity to start after a time lag of 0.4 to 2 seconds compared with the start of the auxiliary air charge injection with an air injection time of 0.5 to 2 seconds - either abruptly or after a gradually increasing process, a standard volume of air amounting to between five and fifty times the working volume of the respective engine being injected during an acceleration operation, depending on the type of engine or the stress involved.

2. An internal combustion engine as claimed in Claim 1, characterised in that the time-lag device (21) is integrated within an electronic control mechanism for the fuel injection pump (22).

3. An internal combustion engine as claimed in Claim 1, characterised in that the delaying or slowing down of the increase in the quantity of fuel is achieved by a time-lag device (21) located in the control mechanism of an electric servomotor.

4. An internal combustion engine as claimed in Claim 1, characterised in that the auxiliary air charge used is supplied through a solenoid valve (18) which is located in a line (17) leading from the compressed air reservoir (14) to the manifold passage (11).

5. An internal combustion engine as claimed in Claim 1, characterised in that the compressed air reservoir (14) is filled by a compressor (12) which is for use with the vehicle braking system and is driven by the internal combustion engine, via a supply line (13) in which a pressure regulator (15) is provided.

6. An internal combustion engine as claimed in Claim 1, characterised in that air injection takes place only when specific engine or vehicle speed limits are adhered to.

7. An internal combustion engine or auxiliary air charge supply as claimed in Claim 1, characterised in that this is used preferably in buses whose drive line has a hydraulic converter with automatic transmission.

8. Internal combustion engines as claimed in Claim 1, characterised in that, with a working volume of 7 l, air injection starts 0.4 to 0.5 seconds prior to reaching the full-load quantity and lasts for 0.5 to 0.8 seconds.

## Revendications

1. Moteur à combustion interne à allumage spontané comprimant de l'air, d'un type de construction et d'une taille qui conviennent principalement à l'utilisation sur des véhicules utilitaires, des camions et des autobus, avec un compresseur d'air de charge (5) entraîné par une turbine à gaz d'échappement (3), en particulier avec un refroidisseur de la charge (9), disposé après le compresseur d'air de charge et une soupape automatique (10) disposée dans la conduite de charge directement avant l'entrée dans le tuyau d'aspiration (11) du moteur à combustion interne, soupape qui est ouverte dans le cas d'un écoulement d'air en direction du tuyau d'aspiration et dans lequel on prend directement à partir d'un accumulateur d'air comprimé de l'air auxiliaire de charge pour accroître l'alimentation du tuyau d'aspiration du moteur à combustion interne pendant des intervalles de temps du manque de l'énergie de gaz d'échappement et on envoie cet air au tuyau d'aspiration par des moyens de commande correspondants et le carburant est injecté avec un retard dans le temps par rapport à l'air auxiliaire de charge, caractérisé en ce que la commande (20) de l'insufflation d'air ainsi qu'un organe de temporisation (21) - déclenchés par actionnement de la pédale d'accélérateur (19) - sont actionnés dans le système d'injection de carburant, grâce à quoi on suralimente temporairement l'injection de carburant par l'amenée de la charge auxiliaire et l'on établit l'injection du plein débit d'injection de carburant seulement plus tard avec un retard dans le temps de 0,4 à 2 secondes par rapport au début de l'insufflation de l'air auxiliaire de charge dans le cas d'une durée d'insufflation de 0,5 à 2 secondes - soit de façon brusque soit après un processus d'accroissement croissant lentement, un volume normal d'air étant insufflé pendant un processus d'accélération selon le type de moteur ou le cas de charge, volume qui atteint entre 5 fois et 50 fois la cylindrée du moteur correspondant.

2. Moteur à combustion interne selon la revendication 1, caractérisé en ce que l'organe de temporisation (21) est intégré à l'intérieur d'une commande électronique de la pompe d'injection (22).

3. Moteur à combustion interne selon la revendication 1, caractérisé en ce que la temporisation ou le ralentissement de l'accroissement du débit de carburant est obtenu au moyen d'un organe de temporisation (21) se trouvant dans la commande d'un servomoteur électrique.

4. Moteur à combustion interne selon la revendication 1, caractérisé en ce que l'air auxiliaire de charge venant à être employé est délimité par une électrovanne (18), qui se trouve dans une conduite (17) allant du réservoir d'air comprimé (14) au tuyau d'aspiration (11).

5. Moteur à combustion interne selon la revendication 1, caractérisé en ce que le réservoir d'air comprimé (14) est rempli par un compresseur (12) servant au système de freinage du véhicule, compresseur qui est entraîné par le moteur à combustion interne, au moyen d'une conduite d'alimentation (13), dans laquelle est prévu un régulateur de pression (15).

6. Moteur à combustion interne selon la revendication 1, caractérisé en ce que l'insufflation de l'air n'a lieu que quand sont atteintes des limites déterminées de la vitesse de rotation du moteur ou de la vitesse d'avancement du véhicule.

7. Moteur à combustion interne ou alimentation en air auxiliaire de charge selon la revendication 1, caractérisé en ce que ce moteur est utilisé de préférence dans le cas d'autobus, dont la ligne d'entraînement dispose d'un convertisseur hydraulique avec boîte de vitesses automatique.

8. Moteur à combustion interne selon la revendication 1, caractérisé en ce que dans le cas d'une cylindrée de 7 litres, le début de l'insufflation a lieu 0,4 à 0,5 seconde avant d'atteindre le débit de pleine charge et la durée de l'insufflation atteint 0,5 à 0,8 seconde.
